# DEMANDE DE BREVET EUROPEEN

(11) **EP 1 538 768 A2**
(43) Date de publication de la demande: **08.06.2005**
(21) Numéro de dépôt: 04292816.8
(22) Date de dépôt: 29.11.2004
(51) Int. Cl.: H04J 14/02

(54) **Multiplexeur optique reconfigurable d'insertion/extraction**

(30) Priorité: 02.12.2003 FR 0314120
(71) Demandeur: ALCATEL, 75008 Paris (FR)
(72) Inventeur: Bisson, Arnaud, 91400 Orsay (FR); Khalfallah, Sabry, 75013 Paris (FR)
(74) Mandataire: Sciaux, Edmond

(57) **Abrégé**

Un dispositif optique de multiplexage (D) est dédié à l'insertion/extraction de ressources optiques dans une ligne de transmission optique comprenant des fibres optiques d'entrée (F1) et de sortie (F2). Ce dispositif (D) comporte i) un premier moyen de couplage (C1) comprenant une entrée et une sortie, raccordées respectivement aux fibres optiques d'entrée (F1) et de sortie (F2), et une entrée/sortie (1) couplée aux entrée et sortie, ii) des moyens de multiplexage/démultiplexage bidirectionnels (2) définissant au moins deux voies internes (3) raccordées chacune à une entrée/sortie primaire (ES1) couplée à l'entrée/sortie (1) et comprenant au moins deux entrées/sorties secondaires (ES2) raccordées chacune à une voie interne (3), et iii) au moins deux modules d'émission et/ou réception (R, T) couplés chacun à une entrée/sortie secondaire (ES2) par des moyens de guidage optique bidirectionnels (4'), équipés de moyens de traitement optique (5, 6) capables de se placer sur ordre au moins dans un état de réflexion destiné à réfléchir une ressource optique vers l'entrée/sortie secondaire (ES2) qui l'a délivrée et un état de transmission permettant le transfert d'une ressource optique entre un module d'émission et/ou de réception (R, T) et l'entrée/sortie secondaire (ES2) associée, la puissance optique transmise ou réfléchie pouvant être éventuellement ajustée.

## Description

L'invention concerne le domaine des équipements de réseau de communications et plus particulièrement les dispositifs optiques de multiplexage, à insertion/extraction de ressources optiques multiplexées, qui équipent certains de ces équipements lorsqu'ils constituent des noeuds de réseau.

On entend ici par « ressources optiques » aussi bien des longueurs d'onde que des bandes de longueurs d'onde.

Le transfert de ressources optiques multiplexées au sein d'un réseau est une opération complexe. Elle nécessite fréquemment, et à différents niveaux, l'insertion ou l'extraction d'informations ou de ressources aux ressources en cours de transfert. De telles insertions et/ou extractions s'effectuent généralement dans des équipements de réseau, tels que des routeurs, qui constituent des noeuds d'un réseau. Plus précisément, ces insertions et/ou extractions s'effectuent à l'aide de dispositifs optiques de multiplexage à insertion/extraction de ressources optiques multiplexées raccordés à des fibres optiques d'entrée et de sortie d'une ligne de transmission optique dans laquelle circulent les ressources optiques.

Ces dispositifs sont raccordés directement ou par l'intermédiaire d'un amplificateur optique à la fibre optique d'entrée (ou fibre amont).

Certains de ces dispositifs comportent tout d'abord un coupleur optique utilisé pour prélever une partie du signal multiplexé en longueur d'onde en sortie de la fibre d'entrée, afin de la transmettre par une sortie à un premier démultiplexeur, de type 1 vers N, délivrant des ressources démultiplexées sur N sorties. L'accès aux ressources qui doivent être traitées localement, par exemple afin de réceptionner les données qu'elles contiennent ou de les régénérer, se fait par ces sorties. L'autre sortie du coupleur alimente un système optique utilisé pour faire transiter les ressources qui doivent être transmises à la fibre optique de sortie. Les autres ressources sont bloquées par le dispositif. Ce dispositif est généralement constitué d'un démultiplexeur, dont chacune des sorties est raccordée à un module d'atténuation optique, par exemple de type VOA (pour « Variable Optical Attenuator »), et d'un multiplexeur chargé de regrouper les ressources. Les ressources regroupées sont ensuite transmises au premier port d'entrée d'un second coupleur dont un second port d'entrée est utilisé pour ajouter de nouvelles ressources préalablement regroupées par un autre multiplexeur. Le port de sortie de ce second coupleur alimente ensuite la fibre de sortie directement ou par l'intermédiaire d'un amplificateur.

Du fait qu'ils comportent quatre composants de multiplexage ou démultiplexage, ces dispositifs sont onéreux et peu compacts. En outre, ces dispositifs induisent des pertes d'insertion élevées entre la fibre d'entrée et la fibre de sortie qui, même en utilisant un module d'amplification optique de part et d'autre du dispositif, peuvent dégrader les ressources.

Pour tenter d'améliorer la situation, plusieurs solutions ont été proposées. Parmi ces solutions, on peut notamment citer celle qui se trouve décrite dans le document brevet GB 2.381.683.

Cette solution consiste à prévoir un dispositif comportant :
- un circulateur optique, comprenant une entrée et une sortie, raccordées respectivement à des fibres optiques d'entrée et de sortie, et une entrée/sortie couplée à ces entrée et sortie, et
- des moyens de multiplexage/démultiplexage bidirectionnels comportant une entrée/sortie primaire, couplée à l'entrée/sortie du premier moyen de couplage, et des entrées/sorties secondaires, et définissant des voies internes (ou ports) raccordées à l'entrée/sortie primaire et aux entrées/sorties secondaires, ces dernières étant en outre couplées à des moyens de guidage optique se subdivisant chacun en une portion bidirectionnelle terminée par un réflecteur, et deux portions monodirectionnelles raccordées respectivement à un module d'émission et un module de réception.

Un tel dispositif permet certes de n'avoir à utiliser que deux composants de démultiplexage ou de multiplexage, mais il impose, d'une part, d'associer à chaque voie trois portions de guide optique, ce qui est encombrant, et d'autre part, d'équiper chaque portion d'un module d'amplification, tel qu'un amplificateur optique à semiconducteur (ou SOA pour « Semiconductor Optical Amplifier »), ce qui peut s'avérer coûteux tant sur le plan de la fabrication que sur celui de la maintenance.

Aucune solution connue n'apportant une entière satisfaction, l'invention a donc pour but d'améliorer la situation.

Elle propose à cet effet un dispositif optique de multiplexage à insertion/extraction de ressources optiques multiplexées, pour une ligne de transmission optique comprenant au moins une fibre optique d'entrée et une fibre optique de sortie, ce dispositif comportant, d'une part, un premier moyen de couplage comprenant une entrée et une sortie, raccordées respectivement aux fibres optiques d'entrée et de sortie, et une entrée/sortie couplée à ces entrée et sortie, et d'autre part, des moyens de multiplexage/démultiplexage bidirectionnels comportant une entrée/sortie primaire, couplée à l'entrée/sortie du premier moyen de couplage, et au moins deux entrées/sorties secondaires, et définissant au moins deux voies internes raccordées à l'entrée/sortie primaire et aux entrées/sorties secondaires.

Ce dispositif optique se caractérise par le fait qu'il comprend au moins deux modules d'émission et/ou de réception couplés chacun à une entrée/sortie secondaire par des moyens de guidage optique bidirectionnels, équipés de moyens de traitement optique montés en série, capables de placer sur ordre au moins dans un état de réflexion destiné à réfléchir une ressource optique vers l'entrée/sortie secondaire qui l'a délivrée et un état de transmission permettant le transfert (insertion ou extraction) d'une ressource optique entre un module d'émission et/ou de réception et l'entrée/sortie secondaire à laquelle il est couplé.

On entend ici par « module d'émission et/ou de réception » soit un module d'émission, soit un module de réception, soit encore un module subdivisé en un module d'émission et un module de réception.

Le dispositif selon l'invention peut comporter d'autres caractéristiques qui pourront être prises séparément ou en combinaison, et notamment :
- chaque module d'émission et/ou de réception peut être subdivisé en un module d'émission et un module de réception, et ses moyens de guidage optique bidirectionnels peuvent être couplés chacun à un module d'émission et à un module de réception par l'intermédiaire d'un moyen de couplage auxiliaire, comme par exemple un coupleur de type un vers deux ou un circulateur optique,
- chaque module d'émission et/ou de réception peut être subdivisé en un module d'émission et un module de réception, et ses moyens de guidage optique bidirectionnels peuvent comporter chacun des deuxième et troisième portions couplées, d'une part, respectivement à un module d'émission et à un module de réception, et d'autre part, à un moyen de couplage auxiliaire raccordé à l'une des entrées/sorties secondaires. Dans ce cas, les moyens de traitement optique peuvent être par exemple implantés sur les deuxièmes et/ou les troisièmes portions. Par ailleurs, on peut également prévoir dans ce cas un second moyen de couplage comportant une entrée et une sortie couplées respectivement à d'autres fibres optiques d'entrée et de sortie, et une entrée/sortie couplée aux entrée et sortie. Les moyens de multiplexage/démultiplexage bidirectionnels comprennent alors une autre entrée/sortie primaire, couplée à l'entrée/sortie du second moyen de couplage, et au moins deux autres entrées/sorties secondaires, et définissent au moins deux autres voies internes raccordées chacune à cette autre entrée/sortie primaire et à l'une des autres entrées/sorties secondaires. Par ailleurs, on prévoit également au moins deux autres modules d'émission et/ou de réception couplés chacun à l'une des autres entrées/sorties secondaires par des moyens de guidage optique bidirectionnels équipés de moyens de traitement optique,
- ses moyens de traitement optique peuvent être capables de se placer dans au moins un état de réflexion avec atténuation destiné à réfléchir une ressource optique, en atténuant son intensité, vers l'entrée/sortie secondaire qui l'a délivrée,
- ses moyens de traitement optique peuvent être capables de se placer dans au moins un état de transmission avec atténuation destiné à permettre le transfert (insertion ou extraction) d'une ressource d'intensité atténuée entre l'un des modules d'émission et/ou de réception et l'entrée/sortie secondaire à laquelle il est couplé,
- ses moyens de traitement optique peuvent comprendre des moyens de réflexion dont la capacité de réflexion est ajustable en fonction d'ordres (ou instructions ou signaux) de configuration reçus. Par exemple, les moyens de réflexion peuvent être des micro systèmes électromécaniques (ou MEMSs) comportant un miroir à position variable pouvant prendre au moins une position de réflexion totale, une position de transmission et/ou de réflexion partielle, et une position de transmission totale,
- ses moyens de traitement optique peuvent comprendre des moyens d'obturation totale capables de coopérer avec les moyens de réflexion afin de définir l'état de réflexion avec atténuation. Par exemple, les seconds moyens de traitement optique peuvent être des micro systèmes électromécaniques (ou MEMSs) pouvant prendre au moins une position d'obturation totale et une position de transmission totale. En variante, les moyens de traitement optique peuvent comprendre des moyens d'atténuation optique variable, par exemple de type VOA, capables de coopérer avec les moyens de réflexion afin de définir l'état de transmission avec atténuation et l'état de réflexion avec atténuation,
- ses moyens de multiplexage/démultiplexage bidirectionnels peuvent définir au moins une autre voie interne raccordée, d'une part, à une entrée, et d'autre part, à une autre entrée/sortie primaire, couplée à un second moyen de couplage installé sur la fibre optique de sortie, en aval du premier moyen de couplage. Chaque entrée/sortie secondaire est alors couplée à un module de réception par les moyens de guidage optique bidirectionnels, et l'on prévoit au moins un module d'émission couplé à l'entrée des moyens de multiplexage/démultiplexage bidirectionnels afin de l'alimenter sur ordre en ressource optique. Dans ce cas, chaque module d'émission peut être couplé à une entrée par l'intermédiaire de moyens de guidage optique mono-directionnels équipés de moyens d'obturation pouvant se placer sur ordre dans au moins un état d'obturation interdisant l'accès d'une ressource à l'une des entrées et un état de transmission permettant le transfert (insertion ou extraction) d'une ressource entre l'un des modules d'émission et l'une des entrées. De tels moyens d'obturation peuvent être par exemple des micro systèmes électromécaniques pouvant prendre au moins une position d'obturation totale et une position de transmission totale,
- le premier et/ou le second moyen de couplage peuvent être un circulateur optique,
- ses moyens de multiplexage/démultiplexage bidirectionnels peuvent être réalisés sous la forme d'un sélecteur de longueurs d'onde en réseau, de type AWG (pour « Arrayed Waveguide Grating »), en particulier lorsque les ressources optiques sont des longueurs d'onde.

L'invention est particulièrement bien adaptée, bien que de façon non exclusive, au domaine des communications optiques, en particulier lorsque les ressources optiques sont des longueurs d'onde ou des bandes de longueurs d'onde.

D'autres caractéristiques et avantages de l'invention apparaîtront à l'examen de la description détaillée ci-après, et des dessins annexés, sur lesquels :
- la figure 1 illustre de façon schématique un premier exemple de réalisation d'un dispositif optique de multiplexage à insertion / extraction de ressources optiques, selon l'invention,
- la figure 2 illustre de façon schématique une première variante de moyens de traitement optique pour le dispositif de la figure 1,
- la figure 3 illustre de façon schématique un deuxième exemple de réalisation d'un dispositif optique de multiplexage à insertion / extraction de ressources optiques, selon l'invention,
- la figure 4 illustre de façon schématique une variante de moyens de traitement optique équipant une variante des moyens de guidage optique du dispositif de la figure 3,
- la figure 5 illustre de façon schématique un troisième exemple de réalisation d'un dispositif optique de multiplexage à insertion / extraction de ressources optiques, selon l'invention, et
- la figure 6 illustre de façon schématique un quatrième exemple de réalisation d'un dispositif optique de multiplexage à insertion / extraction de ressources optiques, selon l'invention.

Les dessins annexés pourront non seulement servir à compléter l'invention, mais aussi contribuer à sa définition, le cas échéant.

L'invention a pour objet de permettre l'insertion et l'extraction de ressources optiques au sein d'une ligne de transmission optique appartenant, par exemple, à un réseau de communications.

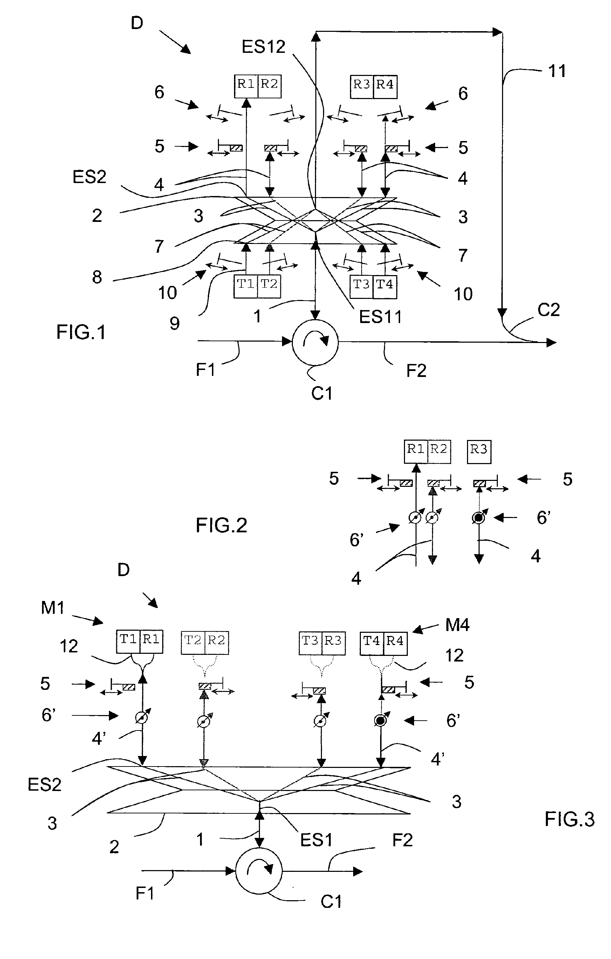

On se réfère tout d'abord à la figure 1 pour décrire un premier exemple de réalisation d'un dispositif optique de multiplexage à insertion / extraction de ressources optiques, permettant de mettre en oeuvre l'invention. Un tel dispositif D peut être par exemple intégré dans un équipement de réseau constituant un noeud de réseau, tel qu'un routeur, raccordé à au moins une ligne de transmission optique constituée d'au moins une fibre optique d'entrée F1 et d'une fibre optique de sortie F2 adaptées à la transmission de ressources optiques multiplexées.

On considère dans ce qui suit que les ressources optiques insérées et extraites sont des longueurs d'onde, mais il pourrait également s'agir de bandes de longueurs d'onde.

Le dispositif D illustré comprend tout d'abord un premier moyen de couplage C1 comprenant une entrée et une sortie raccordées respectivement aux fibres optiques d'entrée F1 et de sortie F2, ainsi qu'une entrée/sortie 1 couplée à ses entrée et sortie. Ce premier moyen de couplage C1 est ici réalisé sous la forme d'un circulateur optique.

Le dispositif D comprend également des moyens de multiplexage/démultiplexage bidirectionnels 2 comprenant notamment une première entrée/sortie primaire ES11 couplée à l'entrée/sortie 1 du circulateur optique C1.

Ces moyens de multiplexage/démultiplexage bidirectionnels 2 assurent à la fois le démultiplexage et le multiplexage de ressources optiques. Ils constituent ce que l'homme de l'art appelle un « OMAD » (pour « Optical Mux And Demux »), par exemple réalisé sous la forme d'un sélecteur de longueurs d'onde en réseau de type AWG (pour « Arrayed Waveguide Grating »).

Un tel OMAD 2 définit au moins deux voies internes 3 raccordées chacune d'une part à sa première entrée/sortie primaire ES11 et d'autre part à l'une de ses entrées/sorties secondaires ES2. Chaque voie interne 3 est agencée de manière à permettre le démultiplexage et/ou le multiplexage de ressources optiques présentant une longueur d'onde choisie.

Dans l'exemple illustré, chaque entrée/sortie ES2i (ici i = 1 à 4, mais il peut prendre n'importe quelle valeur supérieure ou égale à 2) de l'OMAD 2 est couplée à un moyen de guidage optique 4i (matérialisé par une flèche à double sens ou à simple sens) équipé de moyen(s) de traitement optique 5i et 6i et couplé à un module de réception Ri. Ces moyens de guidage optique 4i sont ici de type bidirectionnel. Ils sont préférentiellement réalisés sous la forme de fibres optiques, mais ils peuvent également être conçus différemment, et notamment sous la forme de guides d'onde planaires.

Ici, chaque guide d'onde 4i est équipé de deux moyens de traitement optique 5i et 6i montés en série et agencés de manière à pouvoir définir conjointement au moins deux états : un état de réflexion destiné à réfléchir une ressource optique vers l'entrée/sortie secondaire ES2i qui l'a délivrée et un état de transmission permettant l'acheminement (ou transfert) d'une ressource optique depuis l'entrée/sortie secondaire ES2i qui l'a délivrée vers l'un des modules de réception Ri à laquelle elle est couplée.

Par exemple, comme illustré schématiquement, chaque premier moyen de traitement optique 5i est un (premier) moyen de réflexion présentant une capacité de réflexion ajustable en fonction d'ordres (ou d'instructions ou signaux) de configuration. Il est par exemple réalisé sous la forme d'un micro système électromécanique (ou MEMS pour « Micro Electro Mechanical System ») comprenant un miroir à position variable pouvant prendre au moins une position de réflexion totale (pour la réflexion des signaux à renvoyer vers la fibre de sortie F2), une position de réflexion et/ou de transmission partielle et ajustable (pour la réflexion avec atténuation) et une position de transmission totale (pour la transmission sans atténuation vers le récepteur Ri). Ce miroir coulissant peut être logé dans un espace formé entre deux portions d'un guide d'onde 4i, de manière à pouvoir obstruer leurs sections partiellement, totalement ou pas du tout.

Chaque second moyen de traitement optique 6i (optionnel) est ici chargé de coopérer avec le moyen de réflexion 5i associé afin de bloquer le signal résiduel issu d'une réflexion partielle (au niveau dudit premier moyen de réflexion 5i) et définir ainsi l'état de réflexion avec atténuation. Il est par exemple réalisé sous la forme d'un second moyen de réflexion, tel qu'un micro système électromécanique (MEMS) pouvant prendre une position d'obturation totale et une position de transmission totale. Par exemple, dans la position d'obturation totale, les signaux optiques sont réfléchis dans une direction qui interdit leur réintégration dans le moyen de guidage optique 4.

Dans la configuration illustrée sur la figure 1, d'une première part, les premier 5 et second 6 moyens de traitement optique du guide d'onde 4, couplé au premier module de réception R1 (le plus à gauche), sont tout les deux dans leur état de transmission totale de sorte que les ressources optiques qui parviennent sur la première voie interne 3 de l'OMAD 2 puissent alimenter ce premier module de réception R1, d'une deuxième part, les premier 5 et second 6 moyens de traitement optique des guides d'onde 4, couplés aux deuxième R2 et troisième R3 modules de réception, sont tous dans leur état d'obturation totale de sorte que les ressources optiques qui parviennent sur les deuxième et troisième voies internes 3 de l'OMAD 2 soient réfléchies vers sa première entrée/sortie primaire ES11 afin d'être réinjectées dans la fibre optique de sortie F2 par le circulateur C1, et d'une troisième part, les premier 5 et second 6 moyens de réflexion du guide d'onde 4, couplé au quatrième module de réception R4 (le plus à droite), sont respectivement dans un état de transmission partiel et d'obturation totale de sorte que les ressources optiques qui parviennent sur la quatrième voie interne 3 de l'OMAD 2 soient réfléchies vers sa première entrée/sortie primaire ES11 afin d'être réinjectées, après atténuation, dans la fibre optique de sortie F2 par le circulateur C1. Le signal résiduel issu du premier moyen de traitement optique 5 est alors bloqué par le second moyen de traitement optique 6 afin qu'aucun signal ne parvienne au niveau du module de réception R4.

En variante, comme illustré sur la figure 2, les seconds moyens de traitement optique 6i peuvent être réalisés sous la forme de moyens d'atténuation optique variable 6', par exemple de type VOA. Dans ce cas, les premier moyens de réflexion 5i sont préférentiellement placés plus près des modules de réception Ri que les moyens d'atténuation optique variable 6'.

Par ailleurs, dans l'exemple illustré sur la figure 1 l'OMAD 2 comprend également une seconde entrée/sortie primaire ES12 raccordée à au moins une autre voie interne 7j (ici j = 1 à 4, mais il peut prendre n'importe quelle valeur supérieure ou égale à 1), également raccordée à une entrée 8j. Chaque entrée 8 de l'OMAD 2 est couplée à un module d'émission Tj par l'intermédiaire d'un moyen de guidage optique 9j (matérialisé par une flèche à simple sens) équipé optionnellement de moyen(s) de traitement optique 10j. Ces moyens de guidage optique 9i sont ici de type monodirectionnel. Ils sont préférentiellement réalisés sous la forme de guides d'onde en technologie planaire (ou plus simplement d'une fibre optique).

La seconde entrée/sortie primaire ES12 est également couplée à la fibre optique de sortie F2, en aval du circulateur C1, par l'intermédiaire d'un autre moyen de guidage optique 11 et d'un second moyen de couplage C2. Le moyen de guidage optique 11 est ici de type monodirectionnel. Il est préférentiellement réalisé sous la forme d'une fibre optique. Le second moyen de couplage C2 est ici réalisé sous la forme d'un coupleur optique en Y, c'est-à-dire de type 2 vers 1.

Ici, chaque guide d'onde 9j est équipé d'un moyen de traitement optique 10j agencé de manière à pouvoir définir au moins deux états : un état d'obturation totale destiné à bloquer toute ressource optique émise par le module d'émission Tj et un état de transmission totale permettant l'alimentation d'une voie interne 7j en ressource optique.

Par exemple, comme illustré schématiquement, chaque moyen de traitement optique 10j est réalisé sous la forme d'un moyen « d'obturation », tel qu'un micro système électromécanique (MEMS) comportant un obturateur à position variable pouvant prendre une position d'obturation totale et une position de transmission totale.

Dans la configuration illustrée sur la figure 1, d'une part, le moyen d'obturation 10 du guide d'onde 9, couplé au premier module d'émission T1 (le plus à gauche), est dans son état de transmission totale de sorte que les ressources optiques qui parviennent sur la première voie interne 7 de l'OMAD 2 puissent être dirigées vers sa seconde entrée/sortie primaire ES12 afin d'être injectées (ou insérées) dans la fibre optique de sortie F2 via le guide d'onde 11 et le coupleur C2, et d'autre part, les moyens de réflexion 10 des guides d'onde 9, couplés aux deuxième T2, troisième T3 et quatrième T4 modules d'émission, sont tous dans leur état d'obturation totale de sorte que les ressources optiques soient obturées sans pouvoir parvenir dans l'OMAD 2.

On se réfère maintenant à la figure 3 pour décrire un deuxième exemple de réalisation d'un dispositif optique selon l'invention D. Ce deuxième exemple est une variante compacte du dispositif D décrit précédemment en référence aux figures 1 et 2. Par conséquent, les éléments communs à ces deux exemples de réalisation sont désignés par des références identiques, ou partiellement identiques, et ne seront pas décrits de nouveau en détail.

Ici, l'OMAD 2 ne comprend qu'une série de i voies internes bidirectionnelles 3i (ici i = 1 à 4, mais il peut prendre n'importe quelle valeur supérieure ou égale à 2) raccordées chacune, d'une part, à sa première (et unique) entrée/sortie primaire ES1, elle-même raccordée à l'entrée/sortie 1 du circulateur C1, et d'autre part, à l'une de ses entrées/sorties secondaires ES2i. Par ailleurs, chaque entrée/sortie secondaire ES2i est couplée à un module d'émission et de réception Mi, constitué d'un module de réception Ri et d'un module d'émission Ti, par exemple juxtaposés, par l'intermédiaire de moyens de guidage optique de type bidirectionnel 4' et 12.

Le moyen de guidage optique 12 est par exemple un coupleur en Y raccordé, d'une part, à une extrémité du moyen de guidage 4', et d'autre part, au module d'émission Ti et au module de réception Ri. Mais, en variante le moyen de guidage optique 12 peut être réalisé sous la forme de portions de guide d'onde planaire, ou bien d'un circulateur muni d'une entrée/sortie raccordée au guide d'onde 4', d'une sortie raccordée au module de réception Ri et d'une entrée raccordée au module d'émission Ti.

Cet exemple de réalisation permet, en cas de besoin, non seulement d'atténuer les ressources optiques extraites (destinées à un module de réception Ri) ou réfléchies, mais également celles qui doivent être insérées dans la fibre optique FO.

Les moyens de traitement optique 5 et 6' équipent ici les portions 4' des moyens de guidage optique, qui sont par exemple réalisées sous la forme de guide d'onde en technologie planaire.

Les seconds moyens de traitement optique 6' sont ici préférentiellement réalisés sous la forme de moyens d'atténuation optique variable, par exemple de type VOA, comme dans le cas de la variante de la figure 2.

Dans la configuration illustrée sur la figure 3, d'une première part, les premier 5 et second 6' moyens de traitement optique du guide d'onde 4', couplé au premier module d'émission et de réception M1 (le plus à gauche), sont tout les deux dans leur état de transmission totale de sorte que les ressources optiques qui parviennent sur la première voie interne 3 de l'OMAD 2 puissent alimenter sans atténuation le premier module de réception R1 et que les ressources optiques provenant du premier module d'émission T1 puissent alimenter sans atténuation la première voie interne 3 de l'OMAD 2 en vue d'être insérées dans la fibre optique de sortie F2 , d'une deuxième part, les premier 5 et second 6' moyens de traitement optique des guides d'onde 4', couplés aux deuxième M2 et troisième M3 modules d'émission et de réception, sont tous dans leur état de réflexion (ou obturation) totale de sorte que les ressources optiques qui parviennent sur les deuxième et troisième voies internes 3 de l'OMAD 2 soient réfléchies vers sa première entrée/sortie primaire ES1 afin d'être réinjectées dans la fibre optique de sortie F2 par le circulateur C1, et d'une troisième part, les premier moyens de traitement optique du guide d'onde 4', couplé au quatrième module de réception R4 (le plus à droite), sont dans un état de réflexion partielle, et les seconds moyens de traitement 6' sont dans un état d'atténuation partielle, de sorte que les ressources optiques qui parviennent sur la quatrième voie interne 3 de l'OMAD 2 puissent être soit réfléchies avec atténuation en direction de la quatrième voie interne 3 de l'OMAD 2 en vue d'être réinsérées dans la fibre optique de sortie F2, soit émises par le module d'émission T4 afin d'être introduites après atténuation dans ladite quatrième voie interne 3.

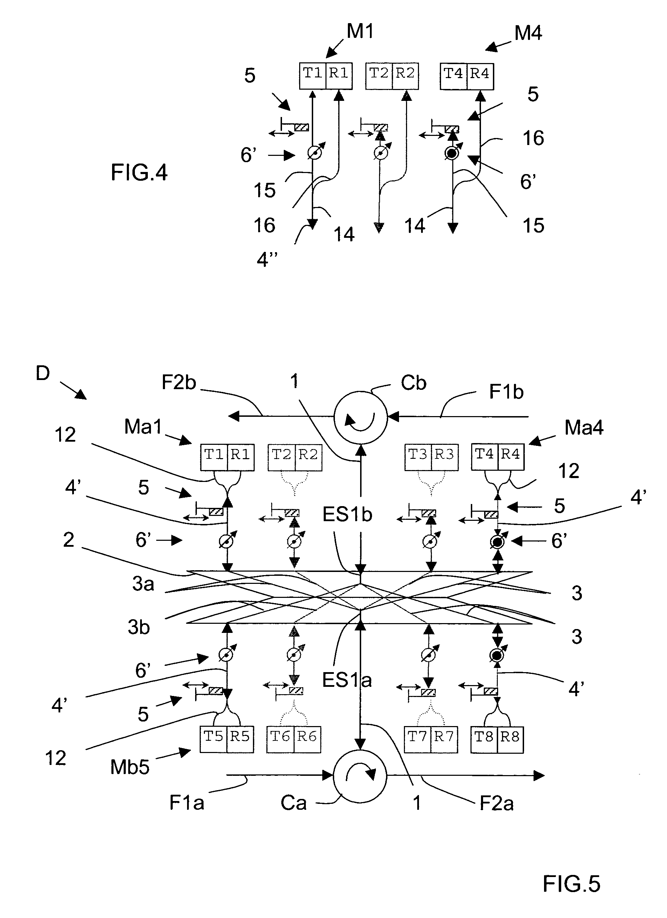

Comme illustré sur la figure 4, on peut envisager une variante de réalisation dans laquelle l'insertion de ressources optiques est contrôlée pour chaque module d'émission et/ou de réception Mi par des moyens de réflexion 5i et par des moyens d'atténuation optique 6'i, par exemple de type VOA. A cet effet, les moyens de guidage optique 4"i associés à chaque voie interne 3i et à chaque module d'émission et de réception Mi sont réalisés sous la forme d'une première portion 14i prolongée par des deuxième 15i et troisième 16i portions raccordées respectivement au module d'émission Ti et au module de réception Ri. Ici, seule la portion 15i dédiée au module d'émission Ti est pourvue des moyens de réflexion 5i et de moyens d'atténuation optique 6'i. Mais, on peut envisager une variante dans laquelle chaque portion 15i et 16i est équipée à la fois de moyens de réflexion 5i et de moyens d'atténuation optique 6'i.

Cette configuration est avantageuse car elle permet de transmettre à un module de réception Ri un signal dont la puissance ne dépend pas de l'atténuation appliquée par l'atténuateur 6'i aux ressources émises par le module d'émission Ti.

Bien entendu, on peut envisager d'autres variantes dans lesquelles chaque deuxième portion 15i et chaque troisième portion 16i est équipée de ses propres moyens de traitement.

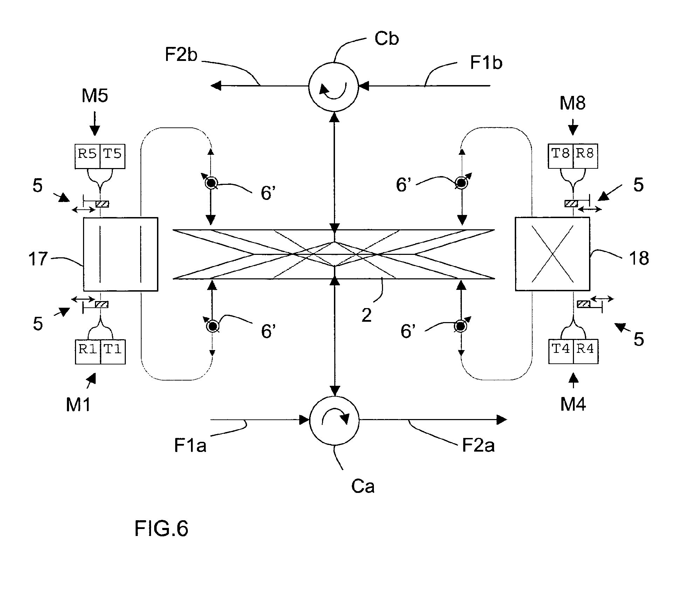

On se réfère maintenant à la figure 5 pour décrire un troisième exemple de réalisation d'un dispositif optique selon l'invention D. Ce troisième exemple est une variante du dispositif D décrit précédemment en référence aux figures 3 et 4. Par conséquent, les éléments communs à ces deux exemples de réalisation sont désignés par des références identiques ou partiellement identiques et ne seront pas décrits de nouveau en détail.

Ici, le dispositif D est agencé de manière à permettre l'insertion et l'extraction de ressources optiques provenant de, ou destinées à, deux paires (a et b) de fibres optiques d'entrée (F1a, F1b) et de sortie (F2a, F2b) à l'aide d'un même OMAD 2. A cet effet, il reprend en deux exemplaires les éléments du deuxième exemple de réalisation en adaptant l'OMAD 2 de sorte qu'il définisse des voies internes 3a et 3b pour l'insertion/extraction de ressources optiques respectivement dans les ou des premières (a) et secondes (b) fibres optiques.

Plus précisément, l'OMAD 2 comprend une première entrée/sortie primaire ES1a raccordée à un premier circulateur Ca (ou équivalent) et à i voies internes 3ai (ici i = 1 à 4, mais il peut prendre n'importe quelle valeur supérieure ou égale à 2), et une seconde entrée/sortie primaire ES1b raccordée à un second circulateur Cb (ou équivalent) et à k voies internes 3bk (ici k = i = 1 à 4, mais il peut prendre n'importe quelle valeur supérieure ou égale à 2). Le premier circulateur Ca est raccordé aux premières fibres optiques d'entrée F1a et de sortie F2a, tandis que le second circulateur Cb est raccordé aux secondes fibres optiques d'entrée F1 b et de sortie F2b. Par ailleurs, les voies internes 3ai et 3bk sont respectivement raccordées à des modules d'émission et de réception Ma et Mb.

Grâce à cette configuration, on peut extraire des ressources optiques provenant de la fibre optique d'entrée F1a (ou F1b) soit pour alimenter, après démultiplexage au niveau des voies internes 3ai (ou 3bk) de l'OMAD 2, l'un au moins des modules de réception Ri (ou Rk), soit pour les réinsérer dans la fibre optique de sortie F2a (ou F2b), après réflexion et une éventuelle atténuation. Par ailleurs, on peut insérer des ressources optiques provenant de l'un au moins des modules d'émission Ti (ou Tk) dans la fibre optique de sortie F2a (ou F2b), après une éventuelle atténuation.

On peut même envisager de transférer des ressources optiques de l'une des fibres optiques vers l'autre fibre optique en créant des liaisons entre les modules d'émission et de réception Mai et Mbk. Une telle situation est illustrée sur la figure 6. Bien que cela n'apparaisse pas sur la figure 6, le dispositif reprend la structure de celui illustré sur la figure 3, mais tous les éléments ne sont pas représentés afin de ne pas surcharger la figure.

Cette configuration consiste plus précisément à renvoyer vers un port (ou voie interne) 3bk (respectivement 3ai) un signal issu d'un port 3ai (respectivement 3bk). A cet effet, on peut par exemple utiliser, dans un but de flexibilité, des commutateurs optiques 17 et 18 de type 2x2.

Le commutateur 17 comporte une première entrée/sortie raccordée à l'entrée/sortie secondaire ES2 de la première voie interne 3a-1, une seconde entrée/sortie raccordée au premier module d'émission et de réception M1 (T1, R1), une troisième entrée/sortie raccordée à l'entrée/sortie secondaire ES2 de la première voie interne 3b-1, et une quatrième entrée/sortie raccordée au cinquième module d'émission et de réception M5 (T5, R5). De même, le commutateur 18 comporte une première entrée/sortie raccordée à l'entrée/sortie secondaire ES2 de la quatrième voie interne 3a-4, une seconde entrée/sortie raccordée au quatrième module d'émission et de réception M4 (T4, R4), une troisième entrée/sortie raccordée à l'entrée/sortie secondaire ES2 de la quatrième voie interne 3b-4, et une quatrième entrée/sortie raccordée au huitième module d'émission et de réception M8 (T8, R8).

En configurant le commutateur 17 comme illustré sur la partie gauche de la figure 6, on peut par exemple transférer des signaux optiques de la fibre d'entrée F1a ou F1b vers la fibre de sortie F2b ou F2a, via les voies internes 3a-1 et 3b-1. Par ailleurs, en configurant le commutateur 18 comme illustré sur la partie droite de la figure 6, on peut par exemple transférer des signaux optiques de la fibre d'entrée F1a vers le module de réception R4 et le réémettre par le module d'émission T4, et renvoyer directement les signaux optiques provenant de la fibre d'entrée F1 b vers la fibre de sortie F2b après avoir atténué leur intensité.

De nombreuses autres combinaisons peuvent être envisagées. Ainsi, on peut par exemple connecter directement les ports des modules d'émission Ti et de réception Ri aux entrées/sorties secondaires ES2i correspondantes afin de rediriger un canal. Par ailleurs, dans l'exemple illustré sur la figure 6, on n'a représenté que deux commutateurs 2x2, mais chaque « couple » de voies internes (3a-i, 3b-i) peut être associé à un commutateur, ou bien seulement certains d'entre eux, voire même un seul.

Grâce à l'invention, on dispose d'un dispositif optique de multiplexage à insertion/extraction de ressources optiques compact, de faible coût, facile à intégrer (du fait qu'il peut être réalisé en technologie planaire), et à faible perte d'insertion (du fait qu'il ne requiert pas de coupleur en amont de ses moyens de démultiplexage).

L'invention ne se limite pas aux modes de réalisation de dispositif optique et d'équipement de réseau décrits ci-avant, seulement à titre d'exemple, mais elle englobe toutes les variantes que pourra envisager l'homme de l'art dans le cadre des revendications ci-après.

## Revendications

1. Dispositif optique de multiplexage (D) à insertion / extraction de ressources optiques pour une ligne de transmission optique comprenant au moins une fibre optique d'entrée (F1) et une fibre optique de sortie (F2), ledit dispositif (D) comportant, d'une part, un premier moyen de couplage (C1, Ca) comprenant une entrée et une sortie, raccordées respectivement aux fibres optiques d'entrée (F1) et de sortie (F2), et une entrée/sortie (1) couplée auxdites entrée et sortie, et d'autre part, des moyens de multiplexage/ démultiplexage bidirectionnels (2) définissant au moins deux voies internes (3) raccordées chacune à une entrée/sortie primaire (ES1, ES11) couplée à ladite entrée/sortie (1) dudit premier moyen de couplage (C1, Ca), **caractérisé en ce que** lesdits moyens de multiplexage/démultiplexage (2) comprennent au moins deux entrées/sorties secondaires (ES2) raccordées chacune à une voie interne (3), et **en ce qu'**il comprend au moins deux modules d'émission et/ou de réception (R, T) couplés chacun à une entrée/sortie secondaire (ES2) par des moyens de guidage optique bidirectionnels (4, 4'), équipés de moyens de traitement optique (5, 6 ; 5, 6') montés en série, propres à se placer sur ordre dans un état parmi au moins un état de réflexion destiné à réfléchir une ressource optique vers l'entrée/sortie secondaire (ES2) qui l'a délivrée et un état de transmission permettant le transfert d'une ressource optique entre l'un desdits modules d'émission et/ou de réception (R, T) et ladite entrée/sortie secondaire (ES2) associée.

2. Dispositif selon la revendication 1, **caractérisé en ce que** chaque module d'émission et/ou réception est subdivisé en un module d'émission (T) et un module de réception (R), et **en ce que** lesdits moyens de guidage optique bidirectionnels (4') sont couplés chacun à un module d'émission (T) et à un module de réception (R) par l'intermédiaire d'un moyen de couplage auxiliaire (12 ; 13).

3. Dispositif selon la revendication 2, **caractérisé en ce que** chaque moyen de couplage auxiliaire (12) est un coupleur de type un vers deux.

4. Dispositif selon la revendication 2, **caractérisé en ce que** chaque moyen de couplage auxiliaire (13) est un circulateur optique.

5. Dispositif selon la revendication 1, **caractérisé en ce que** chaque module d'émission et/ou réception (M) est subdivisé en un module d'émission (T) et un module de réception (R), et **en ce que** lesdits moyens de guidage optique bidirectionnels associés à chaque module (M) comportent de deuxième (15) et troisième (16) portions couplées, d'une part, respectivement à un module d'émission (T) et à un module de réception (R), et d'autre part, à un moyen de couplage auxiliaire (14) raccordé à l'une desdites entrées/sorties secondaires (ES2).

6. Dispositif selon la revendication 5, **caractérisé en ce que** lesdits moyens de traitement optique (5, 6 ; 6') sont implantés sur lesdites deuxièmes (15) et/ou lesdites troisièmes (16) portions.

7. Dispositif selon l'une des revendications 5 et 6, **caractérisé en ce qu'**il comprend un second moyen de couplage (Cb) comportant une entrée et une sortie couplées respectivement à d'autres fibres optiques d'entrée (F1b) et de sortie (F2b), et une entrée/sortie (1b) couplée auxdites entrée et sortie, **en ce que** lesdits moyens de multiplexage/démultiplexage bidirectionnels (2) définissent au moins deux autres voies internes (3b) raccordées chacune, d'une part, à une autre entrée/sortie secondaire (ES2), et d'autre part, à une autre entrée/sortie primaire (ES1b), couplée à ladite entrée/sortie dudit second moyen de couplage (Cb), et **en ce qu'**il comprend au moins deux autres modules d'émission et/ou de réception (R, T) couplés chacun à l'une des autres entrées/sorties secondaires (ES2) par des moyens de guidage optique bidirectionnels (4'), équipés de moyens de traitement optique (5, 6 ; 6').

8. Dispositif selon l'une des revendications 1 à 7, **caractérisé en ce que** lesdits moyens de traitement optique (5) sont propres à se placer dans au moins un état de réflexion avec atténuation destiné à réfléchir une ressource optique, en atténuant son intensité, vers l'entrée/sortie secondaire (ES2) qui l'a délivrée.

9. Dispositif selon l'une des revendications 1 à 8, **caractérisé en ce que** lesdits moyens de traitement optique (6 ; 6') sont propres à se placer dans au moins un état de transmission avec atténuation destiné à permettre le transfert d'une ressource d'intensité atténuée entre l'un desdits modules d'émission et/ou de réception (R, T) et ladite entrée/sortie secondaire (ES2).

10. Dispositif selon l'une des revendications 8 et 9, **caractérisé en ce que** lesdits moyens de traitement optique (5) comprennent des moyens de réflexion à capacité de réflexion ajustable sur ordre.

11. Dispositif selon la revendication 10, **caractérisé en ce que** lesdits moyens de réflexion (5) sont réalisés sous la forme de micro système électromécanique comportant un miroir à position variable propre à prendre au moins une position de réflexion totale, une position de transmission et/ou de réflexion partielle, et une position de transmission totale.

12. Dispositif selon la combinaison de l'une des revendications 8 et 9 et de l'une des revendications 10 et 11, **caractérisé en ce que** lesdits moyens de traitement optique comprennent des moyens d'obturation totale (6) propres à coopérer avec lesdits moyens de réflexion (5) pour définir ledit état de réflexion avec atténuation.

13. Dispositif selon la revendication 12, **caractérisé en ce que** lesdits seconds moyens de réflexion (6) sont réalisés sous la forme de micro système électromécanique propre à prendre au moins une position d'obturation totale et une position de transmission totale.

14. Dispositif selon la combinaison de l'une des revendications 8 et 9 et de l'une des revendications 10 et 11, **caractérisé en ce que** lesdits moyens de traitement optique (6') comprennent des moyens d'atténuation optique variable propres à coopérer avec lesdits moyens de réflexion (5) pour définir ledit état de transmission avec atténuation et ledit état de réflexion avec atténuation.

15. Dispositif selon l'une des revendications 1 et 8 à 14, **caractérisé en ce que** lesdits moyens de multiplexage/démultiplexage bidirectionnels (2) définissent au moins une autre voie interne (7) raccordée, d'une part, à au moins une entrée (8), et d'autre part, à une autre entrée/sortie primaire (ES12) couplée à un second moyen de couplage (C2) installé sur ladite fibre optique de sortie (F2), en aval dudit premier moyen de couplage (C1), **en ce que** chaque entrée/sortie secondaire (ES2) est couplée à un module de réception (R) par lesdits moyens de guidage optique bidirectionnels (4), et **en ce qu'**il comprend au moins un module d'émission (T) couplé à une entrée (8) de manière à l'alimenter sur ordre en ressource optique.

16. Dispositif selon la revendication 15, **caractérisé en ce que** chaque module d'émission (T) est couplé à une entrée (8) par des moyens de guidage optique mono-directionnels (9) équipés de moyens d'obturation (6) propres à se placer sur ordre dans un état parmi au moins un état d'obturation interdisant l'accès d'une ressource à l'une desdites entrées (8) et un état de transmission permettant le transfert d'une ressource optique entre ledit module d'émission (T) et l'entrée associée (8).

17. Dispositif selon la revendication 16, **caractérisé en ce que** lesdits moyens d'obturation (6) sont réalisés sous la forme de micro système électromécanique propre à prendre au moins une position d'obturation totale et une position de transmission totale.

18. Dispositif selon l'une des revendications 1 à 17, **caractérisé en ce que** ledit premier (C1 ; Ca) et/ou ledit second (Cb) moyen de couplage est un circulateur optique.

19. Dispositif selon l'une des revendications 1 à 18, **caractérisé en ce que** lesdits moyens de multiplexage/démultiplexage bidirectionnels (2) sont réalisés sous la forme d'un sélecteur de longueurs d'onde en réseau de type AWG.

20. Dispositif selon l'une des revendications 1 à 19, **caractérisé en ce que** lesdites ressources optiques sont des longueurs d'onde.

21. Dispositif selon l'une des revendications 1 à 18, **caractérisé en ce que** lesdites ressources optiques sont des bandes de longueurs d'onde.
